# EUROPÄISCHE PATENTSCHRIFT

(11) **EP 1 628 385 B1**
(45) Veröffentlichungstag und Bekanntmachung des Hinweises auf die Patenterteilung: **16.06.2010**
(21) Anmeldenummer: 05107377.3
(22) Anmeldetag: 11.08.2005
(51) Int. Cl.: H02K 23/18

(54) **Elektrisch betriebenes Werkzeuggerät**
Electrical power tool
Outil électrique

(30) Priorität: 16.08.2004 DE 102004039611
(43) Veröffentlichungstag der Anmeldung: 22.02.2006
(73) Patentinhaber: HILTI Aktiengesellschaft, 9494 Schaan (LI)
(72) Erfinder: Riedl, Reinhard, 86923, Finning (DE)
(74) Vertreter: Wildi, Roland

(56) Entgegenhaltungen:
- DE-A1- 10 152 963
- GB-A- 314 576

## Beschreibung

Die Erfindung betrifft ein Werkzeuggerät mit einem Gehäuse, in dem ein elektrischer Motor untergebracht ist, der zwischen einem Rechts- und einem Linkslauf umschaltbar ist. Hierzu ist ein Bürstenträger vorgesehen, an dem mindestens zwei Bürsten zur elektrischen Kontaktierung mit einem Kommutator des Motors gehalten sind, sowie ein von ausserhalb des Gehäuses zugängiges Betätigungselement, über das der Bürstenträger gegenüber dem Gehäuse in Umfangsrichtung des Kommutators in eine Rechtslaufstellung und eine Linkslaufstellung verdrehbar ist. Ferner weist das Werkzeuggerät eine Vorspannungseinrichtung auf, mittels der der Bürstenträger in beide Laufstellungen vorgespannt werden kann.

Bei Werkzeuggeräten mit einem derartig verdrehbaren Bürstenträger werden die Laufstellungen derart festgelegt, dass eine optimierte Kommutierung erzielt wird. Dabei werden beim Verdrehen des Bürstenträgers zwischen den Laufstellungen die Motoranschlüsse umgepolt und dadurch die Laufrichtung des Werkzeuggerätes geändert.

Aus der DE 101 52 963 ist eine Elektromaschine bekannt, bei der am Bürstenträger ein bistabiles Federelement angreift, das den Bürstenträger nach Durchlaufen einer instabilen mittleren Stellung in Umfangsrichtung jeweils in eine von zwei Endstellungen vorspannt. Dabei ist das Federelement durch eine Schenkelfeder gebildet, die zwischen dem Bürstenträger und dem Gehäuse angeordnet ist und mit einem Schenkel mit dem Gehäuse in Eingriff steht, während der zweite Schenkel an dem Bürstenträger angreift. In axialer Richtung ist der Bürstenträger beidseitig am Gehäuse abgestützt.

Durch diese bekannte Vorspannungseinrichtung kann der Bürstenträger stabil in der jeweiligen Laufstellung gehalten werden. Auf diese Weise kann für beide Laufrichtungen eine optimierte Kommutierung erzielt werden, wobei zudem ein komfortables Umschalten ermöglicht wird.

Nachteilig an dem bekannten Werkzeuggerät ist jedoch, dass das Axialspiel zwischen dem Bürstenträger und dem Gehäuse, das zur drehbeweglichen Lagerung des Bürstenträgers erforderlich ist, durch das Gehäuse bestimmt ist. Hierdurch können sich Fertigungstoleranzen bei der Herstellung des Gehäuses oder temperaturbedingte Verformungen des Gehäuses, insbesondere infolge von Geräteerwärmungen im Betrieb, zu Störungen beim Umschalten zwischen den Laufrichtungen und zu Fehlstellungen des Bürstenträgers gegenüber dem Kommutator führen, die eine schlechtere Kommutierung und damit eine Leistungsabnahme des Werkzeuggerätes zur Folge haben können.

Der vorliegenden Erfindung liegt die Aufgabe zugrunde, bei einem Werkzeuggerät die genannten Nachteile zu vermeiden und bei einfachem Aufbau jederzeit eine stabile und genaue Lagerung des Bürstenträgers zu gewährleisten.

Erfindungsgemäss wird die Aufgabe dadurch gelöst, dass die Vorspanneinrichtung mindestens ein Federelement aufweist, das den Bürstenträger sowohl in Umfangsrichtung als auch in axialer Richtung des Kommutators mit einer Federkraft beaufschlagt. Auf diese Weise spannt die Vorspanneinrichtung den Bürstenträger nicht nur in Umfangsrichtung in die jeweils eingestellte Laufstellung sondern zudem auch in die gewünschte Axialstellung. Hierdurch können Störungen infolge des Axialspiels zwischen Gehäuse und Bürstenträger vermieden werden. Dabei werden die Vorspannungen sowohl in Umfangsrichtung als auch in Axialrichtung durch ein einziges Federelement erzeugt, was die Herstellungskosten vermindert und die Montage erleichtert.

Vorteilhafterweise weist das Federelement zwei im Wesentlichen spiegelsymmetrisch einander gegenüberliegende und miteinander verbundene Bogenabschnitte auf. Hierdurch kann das Federelement bei einfacher Formgebung sowohl in zwei entgegen gesetzten Richtungen quer zu den Bogenabschnitten als auch in einer tangentialen Richtung der Bogenabschnitte eine Federkraft erzeugen.

In einer besonders bevorzugten Ausführungsform weist das Federelement ein längliches Grundelement auf, das im Wesentlichen schlaufenförmig ausgebildet ist. Als längliches Grundelement kann dabei beispielsweise ein draht- oder bandförmiges Material, insbesondere Metall, dienen. Hierdurch ist das Federelement besonders kostengünstig herstellbar.

Vorteilhafterweise ist das längliche Grundelement durch eine Einzelblattfeder gebildet. Hierdurch können durch das Federelement ausreichend grosse Federkräfte erzeugt werden.

Bevorzugterweise formt das Federelement an zwei einander gegenüberliegenden Seiten jeweils ein Eingriffprofil aus, von denen das eine im montierten Zustand mit einem gehäusefesten Gegeneingriffprofil und das andere gleichzeitig mit einem Gegeneingriffprofil des Bürstenträgers in Eingriff steht. Auf diese Weise kann das Federelement besonders leicht montiert werden, wobei die für die Verbindungen zwischen dem Federelement und dem Gehäuse sowie dem Bürstenträger erforderlichen Elemente besonders kostengünstig herstellbar sind.

Vorteilhafterweise weist die Vorspanneinrichtung wenigstens zwei Federelemente auf, wodurch der Bürstenträger sowohl in Umfangsrichtung als auch in Axialrichtung besonders stabil festgelegt werden kann.

Dabei ist es besonders günstig, wenn die beiden Federelemente gegenüber der Achse des Kommutators eine einander entgegen gesetzte Neigung aufweisen. Auf diese Weise kann der Bürstenträger zusätzlich gegenüber der Achse des Kommutators durch die Vorspanneinrichtung zentriert werden.

Die Erfindung wird nachstehend anhand eines Ausführungsbeispieles näher erläutert. Es zeigen:
- Fig. 1: einen teilweisen Längsschnitt durch ein erfindungsgemässes Werkzeuggerät,
- Fig. 2: eine rückseitige Ansicht einer Vorspannungseinrichtung des Werkzeuggerätes nach Fig. 1,
- Fig. 3: eine Draufsicht auf die Vorspannungseinrichtung nach Fig. 2,
- Fig. 4: eine perspektivische Ansicht eines Federelementes der Vorspannungseinrichtung nach Fig. 2 und 3 und
- Fig. 5: eine Draufsicht auf das Federelement nach Fig. 4.

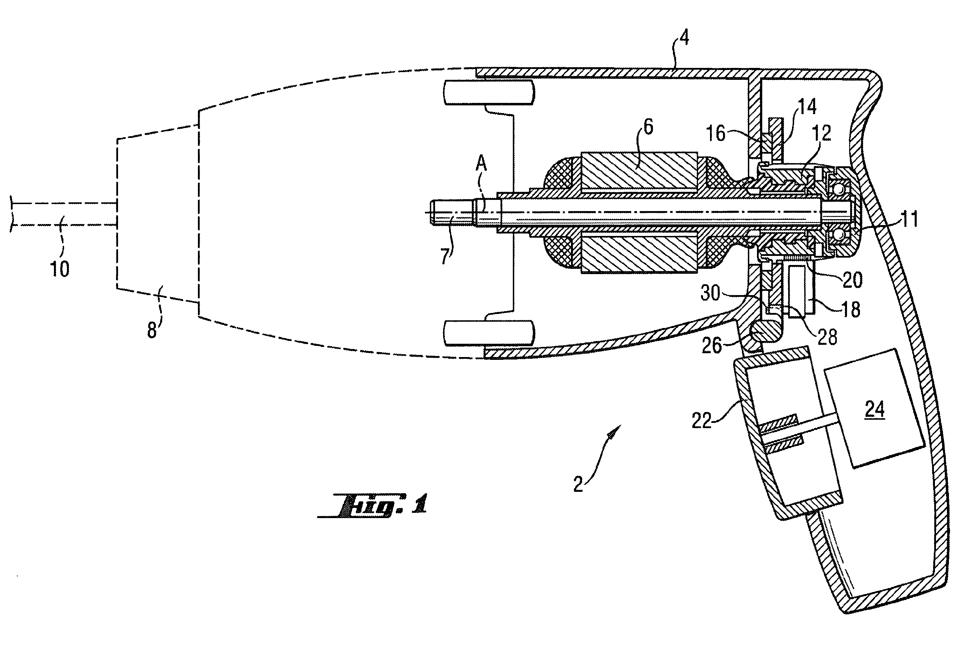

Fig. 1 zeigt ein Werkzeuggerät 2 in Form eines Schraub- oder Bohrgerätes. Das Werkzeuggerät 2 weist ein Gehäuse 4 auf, in dem ein Motor 6 untergebracht ist. Der Motor 6 treibt eine Motorwelle 7 an, die in nicht näher dargestellter Weise mit einer Werkzeugaufnahme 8 rotatorisch gekoppelt ist, an der ein Werkzeug 10, wie beispielsweise ein Bohrer- oder Schrauberbit, anbringbar ist. Die Motorwelle 7 ist dabei an einem von der Werkzeugaufnahme 8 abgewandten Ende in einem gehäusefesten Lagerbock 11 drehbar gelagert.

Der Motor 6 ist zwischen einem Rechts- und einem Linkslauf umschaltbar. Hierzu ist um einen Kommutator 12 des Motors 6 herum ein ringförmiger Bürstenträger 14 begrenzt verdrehbar an einem gehäusefesten Lagerring 16 gehalten. Der Bürstenträger 14 trägt zwei Bürstenführungen 18 in denen jeweils eine Kohlebürste 20 zur elektrischen Kontaktierung mit dem Kommutator 12 gehalten ist. Zur Verdrehung des Bürstenträgers 14 um eine Achse A des Motors bzw. des Kommutators herum ist im Gehäuse 4 oberhalb eines Drückers 22 eines Motorschalters 24 ein Betätigungselement 26 gelagert.

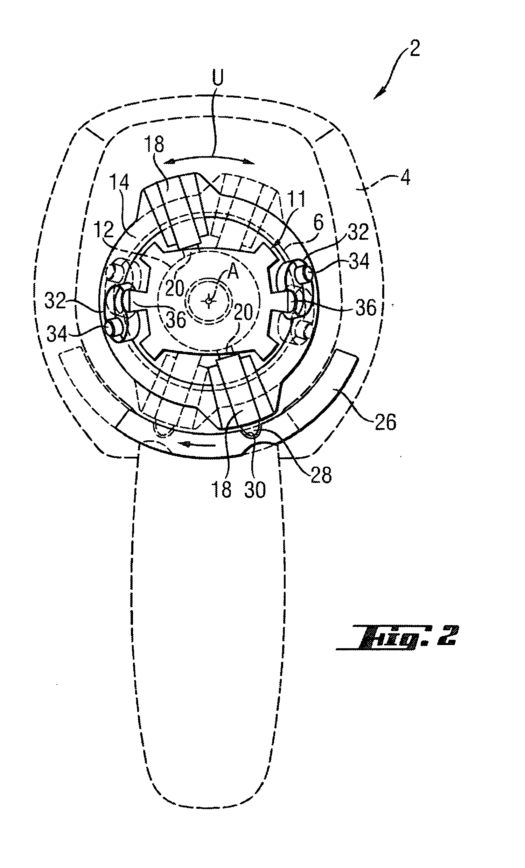

Wie insbesondere aus Fig. 2 zu entnehmen ist, ist das Betätigungselement 26 bogenförmig ausgeformt und um die Achse A herum verschiebbar am Gehäuse 4 gelagert. Dabei greift ein am Bürstenträger 14 ausgeformter Nocken 28 in eine Mitnahmeausnehmung 30 des Betätigungselementes. Hierdurch kann der Bürstenträger 14 durch Druck auf ein Ende des Betätigungselementes 14, das aus dem Gehäuse 4 heraus ragt, aus einer dargestellten Rechtslaufstellung entlang einer Umfangsrichtung U des Kommutators 12 in eine gestrichelt dargestellte Linkslaufstellung verschoben werden.

Zwischen dem Bürstenträger 14 und dem Lagerbock 11 ist dabei eine Vorspannungseinrichtung vorgesehen, die zwei schlaufenförmige Federelemente 32 aufweist. Beide Federelemente 32 stützen sich jeweils an einem Trägernocken 34 des Bürstenträgers 14 und an einem vom Lagerbock 11 abragenden Lagernocken 36 ab, so dass die Federelemente 32 den Bürstenträger 14 in axialer Richtung gegen den Lagerring 16 drücken.

Sowohl in der Rechtslaufstellung als auch in der Linkslaufstellung stehen dabei die Trägernocken 34 in Umfangsrichtung U etwas versetzt zu den Lagernocken 36. Hierdurch erzeugen die Federelemente 32 neben der axialen Anpresskraft auch eine in Umfangsrichtung U wirkende Kraftkomponente, die den Bürstenträger 14 in die jeweils eingestellte Laufstellung drückt.

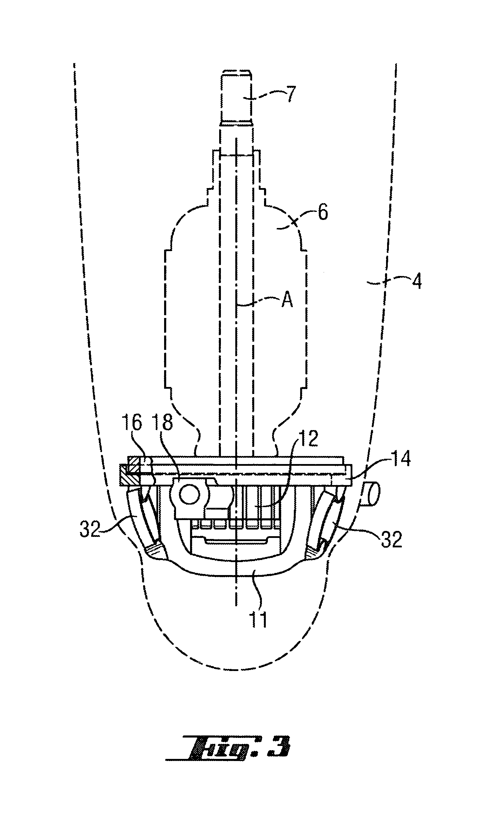

Wie insbesondere aus Fig. 3 zu entnehmen ist, sind die Federelemente 32 zudem zum Bürstenträger 14 hin gegenüber der Achse A etwas nach aussen geneigt angeordnet. Dadurch wird der Bürstenträger 14 zusätzlich gegenüber dem Kommutator 12 zentriert.

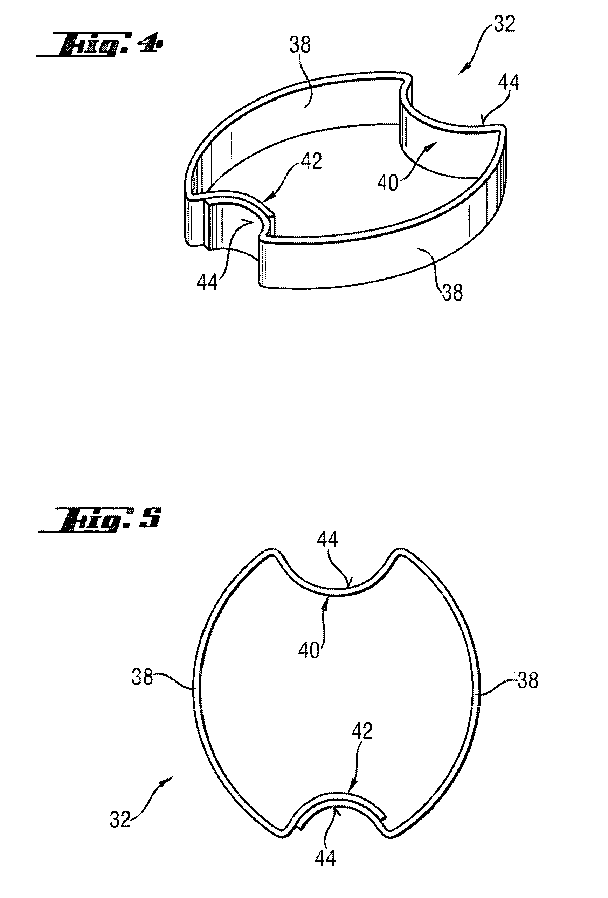

Wie aus den Fig. 4 und 5 zu entnehmen ist, sind die Federelemente 32 durch Einzelblattfedern gebildet, die im Wesentlichen schleifenförmig gebogen sind. Hierdurch weisen beide Federelemente 32 zwei spiegelsymmetrisch angeordnete Bogenabschnitte 38 auf, die über einen Verbindungsabschnitt 40 verbunden sind. Gegenüber dem Verbindungsabschnitt 40 überlappen die beiden Enden der Einzelblattfeder und bilden somit einen Überlappungsabschnitt 42. Sowohl der Verbindungsabschnitt 40 als auch der Überlappungsabschnitt 42 sind dabei eingedellt und bilden auf diese Weise ein Eingriffprofil 44, das auf die Form der Trägernocken 34 und der Lagernocken 36 abgestimmt ist. Auf diese Weise bilden die Trägernocken 34 und Lagernocken 36 jeweils ein Gegeneingriffprofil, mit dem die Federelemente 32 bei der Montage durch einfaches Aufstecken in Eingriff gebracht werden können.

Die Federelemente 32 werden bei der Montage so zwischen dem Bürstenträger 14 und dem Lagerbock 11 eingesetzt, dass die Bogenabschnitte 38 gegenüber der in den Fig. 4 und 5 gezeigten Stellung permanent nach aussen verformt sind. Hierdurch drücken die Rückverformungskräfte der Bogenabschnitte 38 den Verbindungsabschnitt 40 und den Überlappungsabschnitt 42 auseinander, wodurch der Bürstenträger 14 vom Lagerbock 11 weg in axialer Richtung dauerhaft gegen den Lagerring 16 gedrückt wird. Gleichzeitig drücken die Federelemente 32 den Bürstenträger 14 in Umfangsrichtung U in die eingestellte Laufstellung.

Beim Betätigen des Betätigungselementes 26 wird der Bürstenträger 14 aus der bisherigen Laufstellung bis zu einem instabilen Totpunkt, in dem die Bogenabschnitte 38 am stärksten verformt sind, entgegen der Federkraft der Federelemente 32 verdreht. Unmittelbar nach Durchlaufen dieses Totpunktes verformen sich die Bogenabschnitte 38 zurück und drücken dabei den Bürstenträger 14 ruckartig in die neue Laufstellung.

## Patentansprüche

1. Werkzeuggerät (2)
mit einem Gehäuse (4),
einem in dem Gehäuse (4) untergebrachten elektrischen Motor (6), der zwischen einem Rechts- und einem Linkslauf umschaltbar ist,
einem Bürstenträger (14), an dem mindestens zwei Bürsten (20) zur elektrischen Kontaktierung mit einem um eine Achse (A) rotierbaren Kommutator (12) des Motors (6) gehalten sind,
einem von ausserhalb des Gehäuses (4) zugängigen Betätigungselement (26), über das der Bürstenträger (14) gegenüber dem Gehäuse (4) in Umfangsrichtung (U) des Kommutators (12) in eine Rechtslaufstellung und eine Linkslaufstellung verdrehbar ist und
einer Vorspannungseinrichtung, mittels der der Bürstenträger (14) in beide Laufstellungen vorspannbar ist,
**dadurch gekennzeichnet, dass** die Vorspanneinrichtung mindestens ein Federelement (32) aufweist, das den Bürstenträger (14) sowohl in Umfangsrichtung (U) als auch in axialer Richtung des Kommutators (12) mit einer Federkraft beaufschlagt.

2. Werkzeuggerät nach Anspruch 1, **dadurch gekennzeichnet, dass** das Federelement (32) zwei einander gegenüber liegende und miteinander verbundene Bogenabschnitte (38) aufweist.

3. Werkzeuggerät nach Anspruch 1 oder 2, **dadurch gekennzeichnet, dass** das Federelement (32) ein längliches Grundelement aufweist, das im Wesentlichen schlaufenförmig ausgebildet ist.

4. Werkzeuggerät nach Anspruch 3, **dadurch gekennzeichnet, dass** das längliche Grundelement durch eine Einzelblattfeder gebildet ist.

5. Werkzeuggerät nach einem der Ansprüche 1 bis 4, **dadurch gekennzeichnet, dass** das Federelement (32) an zwei einander gegenüberliegenden Seiten jeweils ein Eingriffprofil (44) ausformt, von denen das eine im montierten Zustand mit einem gehäusefesten Gegeneingriffprofil und das andere gleichzeitig mit einem Gegeneingriffprofil des Bürstenträgers (14) in Eingriff steht.

6. Werkzeuggerät nach einem der Ansprüche 1 bis 5, **dadurch gekennzeichnet, dass** die Vorspanneinrichtung wenigstens zwei der Federelemente (32) aufweist.

7. Werkzeuggerät nach Anspruch 6, **dadurch gekennzeichnet, dass** die beiden Federelemente (32) gegenüber der Achse (A) des Kommutators eine einander entgegen gesetzte Neigung aufweisen.

## Claims

1. Tool (2), comprising
a housing (4),
an electric motor (6) accommodated in the housing (4) and switchable between clockwise and anti-clockwise rotation,
a brush holder (14) holding at least two brushes (20) for electrically contacting a commutator (12) of the motor (6) rotatable about an axis (A),
an actuating element (26) accessible from outside the housing (4) by means of which the brush holder (14) can be rotated relative to the housing (4) in the circumferential direction (U) of the commutator (12) into a clockwise rotational position and an anti-clockwise rotational position and
a preloading device by means of which the brush holder (14) can be preloaded in both rotational positions,
**characterised in that** the preloading device comprises at least one spring element (32) applying a spring force to the brush holder (14) both in the circumferential direction (U) and in the axial direction of the commutator (12).

2. Tool according to claim 1, **characterised in that** the spring element (32) comprises two arcuate sections (38) situated opposite one another and connected together.

3. Tool according to claim 1 or claim 2, **characterised in that** the spring element (32) comprises an elongated base element substantially in the form of a loop.

4. Tool according to claim 3, **characterised in that** the elongated base element is formed by a single-leaf spring.

5. Tool according to one of claims 1 to 4, **characterised in that** the spring element (32) is provided on two opposing sides with respective engagement profiles (44), one engaging with a counter engagement profile secured to the housing in the assembled state and the other simultaneously engaging with a counter engagement profile of the brush holder (14).

6. Tool according to one of claims 1 to 5, **characterised in that** the preloading device comprises at least two of the spring elements (32).

7. Tool according to claim 6, **characterised in that** the two spring elements (32) are inclined in opposite directions with respect to the axis (A) of the commutator.

## Revendications

1. Appareil (2) comprenant un carter (4), un moteur électrique (6) qui est logé dans le carter (4) et qui est commutable entre une marche à droite et une marche à gauche, un porte-balais (14) sur lequel sont maintenus au moins deux balais (20) pour la mise en contact électrique avec un commutateur (12), apte à tourner autour d'un axe (A), du moteur (6), un élément d'actionnement (26) qui est accessible depuis l'extérieur du carter (4) et qui permet de faire tourner le porte-balais (14) par rapport au carter (4) dans la direction circonférentielle (U) du commutateur (12) vers une position de marche à droite et vers une position de marche à gauche, et un agencement de précontrainte permettant de précontraindre le porte-balais (14) dans les deux positions de marche, **caractérisé en ce que** l'agencement de précontrainte comporte au moins un élément élastique (32) qui impose au porte-balais (14) une force élastique aussi bien dans la direction circonférentielle (U) que dans la direction axiale du commutateur (12).

2. Appareil selon la revendication 1, **caractérisé en ce que** l'élément élastique (32) comporte deux portions arquées (38) opposées l'une à l'autre et reliées entre elles.

3. Appareil selon la revendication 1 ou 2, **caractérisé en ce que** l'élément élastique (32) comporte un élément de base allongé qui présente sensiblement la forme d'un passant.

4. Appareil selon la revendication 3, **caractérisé en ce que** l'élément de base allongé est formé par un ressort à lame unique.

5. Appareil selon une des revendications 1 à 4, **caractérisé en ce que** l'élément élastique (32) comporte, sur chacun de deux côtés opposés, un profil de préhension (44), dont l'un, en position montée, est en prise avec un profil de préhension antagoniste solidaire du carter et l'autre est en prise simultanément avec un profil de préhension antagoniste du porte-balais (14).

6. Appareil selon une des revendications 1 à 5, **caractérisé en ce que** l'agencement de précontrainte comporte au moins deux des éléments élastiques (32).

7. Appareil selon la revendication 6, les deux éléments élastiques (32) présentent des inclinaisons opposées l'une à l'autre par rapport à l'axe (A).
